# EUROPÄISCHE PATENTANMELDUNG

(11) **EP 4 793 068 A1**
(43) Veröffentlichungstag der Anmeldung: **19.08.2026**
(21) Anmeldenummer: 26154596.6
(22) Anmeldetag: 28.01.2026
(51) Int. Cl.: B60C 23/04

(54) **VERFAHREN ZUM EMPFANGEN VON REIFENDATEN MIT EINER TELEMATIKEINHEIT**

(30) Priorität: 18.02.2025 DE 102025106004
(71) Anmelder: Continental Reifen Deutschland GmbH, 30175 Hannover (DE)
(72) Erfinder: Jaedicke, Jessica, 30175 Hannover (DE); Dr. Lehmann, Jörg, 30175 Hannover (DE); James, Akhil, 30175 Hannover (DE)
(74) Vertreter: Continental Corporation

(57) **Zusammenfassung**

Es wird ein Verfahren mit den folgenden Schritten vorgeschlagen:
a) Bereitstellen eines Fahrzeuges mit mindestens einem Fahrzeugreifen mit einem Reifenmodul (1),
wobei das Reifenmodul (1) eine Sendeeinheit zum Senden von Reifendaten umfasst,
b) Bereitstellen einer Telematikeinheit (2),
wobei mit der Telematikeinheit (1) die Reifendaten empfangen und über eine drahtlose Verbindung an ein Backend (3) einer externen Rechnereinheit weitergeleitet werden,
wobei die im Backend (3) gespeicherten und ausgewerteten Reifendaten einem Flottenmanagement bereit gestellt werden,

c) Auswerten der Reifendaten mit der Telematikeinheit (2),
wobei beim Detektieren von speziellen Reifendaten eine Warnmeldung generiert wird,
d) Direktes Weiterleiten der generierten Warnmeldung an eine Anzeigevorrichtung für den Fahrer (4) des Fahrzeuges,
wobei die Warnmeldung den Fahrer über einen Fehlerzustand an einem Fahrzeugreifen informiert.

## Beschreibung

Es ist bekannt, bei Fahrzeugreifen eine Reifendrucküberwachung einzusetzen, um einen Druckverlust und andere Parameter des Reifens sicher zu detektieren.

Es existieren am Markt unterschiedliche Systeme von Reifendrucküberwachungen, die auf unterschiedliche Art und Weise mit einem externen Empfangssystem kommunizieren.

Der Erfindung lag die Aufgabe zugrunde, ein Verfahren bereitzustellen, mit dem das Empfangen von Reifendaten wesentlich verbessert wird.

Es soll insbesondere sichergestellt werden, dass der Fahrer des Fahrzeuges eine direkte Warnmeldung erhält, wenn beispielsweise an einem der Fahrzeugreifen ein signifikanter Druckverlust festgestellt wird.

Gelöst wird die Aufgabe durch ein Verfahren mit den folgenden Schritten:
a) Bereitstellen eines Fahrzeuges mit mindestens einem Fahrzeugreifen mit einem Reifenmodul,
   wobei das Reifenmodul eine Sendeeinheit zum Senden von Reifendaten umfasst,
b) Bereitstellen einer Telematikeinheit,
   wobei mit der Telematikeinheit die Reifendaten empfangen und über eine drahtlose Verbindung an ein Backend einer externen Rechnereinheit weitergeleitet werden,
   wobei die im Backend gespeicherten und ausgewerteten Reifendaten einem Flottenmanagement bereit gestellt werden,
c) Auswerten der Reifendaten mit der Telematikeinheit,
   wobei beim Detektieren von speziellen Reifendaten eine Warnmeldung generiert wird,
d) Direktes Weiterleiten der generierten Warnmeldung an eine Anzeigevorrichtung für den Fahrer des Fahrzeuges
wobei die Warnmeldung den Fahrer über einen Fehlerzustand an einem Fahrzeugreifen informiert.

Ein Vorteil der Erfindung ist insbesondere darin zu sehen, dass mit dem neuen Verfahren das Empfangen von Reifendaten wesentlich verbessert wird.

Bei dem neuen Verfahren erfolgt eine direkte Auswertung der Reifendaten mit der Telematikeinheit. Im Normalfall werden die Reifendaten mit der Telematikeinheit und über eine Mobilverbindung an ein Backend von einer externen Rechnereinheit weitergeleitet. Anschließend werden die empfangenen Reifendaten im Backend einem Flottenmanager zur Verfügung gestellt. Der Flottenmanager kann dann anhand der Reifendaten entscheiden, ob eine Wartung von bestimmten Fahrzeugreifen erforderlich ist. Beim neuen Verfahren wird mit der Telematikeinheit festgestellt, wenn einer der Fahrzeugreifen am Fahrzeug einen signifikanten Fehler aufweist, beispielsweise einen erheblichen Minderdruck. In diesem Fall wird mit einer Software der Telematikeinheit eine entsprechende Warnmeldung generiert. Diese Warnmeldung wird mit der Telematikeinheit direkt an eine Anzeigevorrichtung für den Fahrer des Fahrzeuges weitergeleitet. Der Fahrer erhält dann direkt über die Anzeigevorrichtung mitgeteilt, dass einer der Fahrzeugreifen einen signifikanten Fehler aufweist, beispielsweise einen erheblichen Minderdruck. Das neue Verfahren stellt insbesondere eine Verbesserung für Fahrzeuge dar, die im Normalfall diese Art von Fehlermeldungen nicht in einem Display des Fahrzeuges angezeigt bekommen.

In einer vorteilhaften Weiterbildung der Erfindung ist vorgesehen, dass die Anzeigevorrichtung ein Smartphone, Smartwatch oder Handy von dem Fahrer ist, wobei die Warnmeldung als SMS oder als Pop-Up-Mitteilung angezeigt wird. Dadurch kann die Warnmeldung auf einfache Weise dem Fahrer angezeigt werden. In vielen Fällen benutzen Fahrer ihr Smartphone beispielsweise als Navigationsgerät, wodurch das Smartphone beim Fahren sichtbar für den Fahrer im Fahrzeug angeordnet ist.

In einer weiteren vorteilhaften Weiterbildung der Erfindung ist vorgesehen, dass die Anzeigevorrichtung ein Display vom Fahrzeug ist, wobei die Warnmeldung als Pop-Up-Mitteilung angezeigt wird.

Die Telematikeinheit könnte sich beispielsweise über eine Bluetooth Verbindung auf einfache Weise mit einem Display vom Fahrzeug verbinden. Anschließend können Warnmeldungen direkt über das Display des Fahrzeuges angezeigt werden.

In einer weiteren vorteilhaften Weiterbildung der Erfindung ist vorgesehen, dass die Mobilfunknummer des Fahrers im Backend gespeichert sind,
wobei die Telematikeinheit die Mobilfunknummer registriert und die Warnmeldung an die Mobilfunknummer des Fahrers sendet, der momentan das Fahrzeug fährt. Dadurch kann die Telematikeinheit die Warnmeldung direkt an die korrekte Mobilfunknummer weiterleiten, beispielsweise per SMS oder über eine Bluetooth Verbindung.

In einer weiteren vorteilhaften Weiterbildung der Erfindung ist vorgesehen, dass am Fahrzeug und/oder Fahrzeuganhänger ein QR-Code angeordnet ist, wobei sich der Fahrer mit dem QR-Code für die anstehende Fahrt registriert und anschließend die Mobilfunknummer des Fahrers an die Telematikeinheit weitergeleitet wird.

Dadurch erfolgt eine einfache Verknüpfung zwischen dem Fahrzeug und der Mobilfunknummer des Fahrers, der das Fahrzeug momentan fährt.

In einer weiteren vorteilhaften Weiterbildung der Erfindung ist vorgesehen, dass auf dem Smartphone oder der Smartwatch eine Software-App installiert ist, wobei mit der Software-App die Warnmeldungen und/oder die Reifendruckwerte für die einzelnen Fahrzeugreifen des Fahrzeuges angezeigt werden.

Dadurch hat der Fahrer des Fahrzeuges Zugriff auf die wichtigsten Reifendaten von den Fahrzeugreifen des Fahrzeuges.

In einer weiteren vorteilhaften Weiterbildung der Erfindung ist vorgesehen, dass die Übertragung der Warnmeldung zur Anzeigevorrichtung mit einer Bluetooth-Verbindung erfolgt.

Die Anzeigevorrichtungen lassen sich mit einer Bluetooth Verbindung auf einfache Weise miteinander koppeln.

In einer weiteren vorteilhaften Weiterbildung der Erfindung ist vorgesehen, dass die Reifendaten vom Reifenmodul eine gemessene Temperatur, einen gemessenen Druck, eine gemessene Reifenlast und/oder ermittelte Profiltiefe des Fahrzeugreifens umfassen.

Anhand eines Ausführungsbeispiels wird die Erfindung im Folgenden näher beschrieben.

Es zeigt:

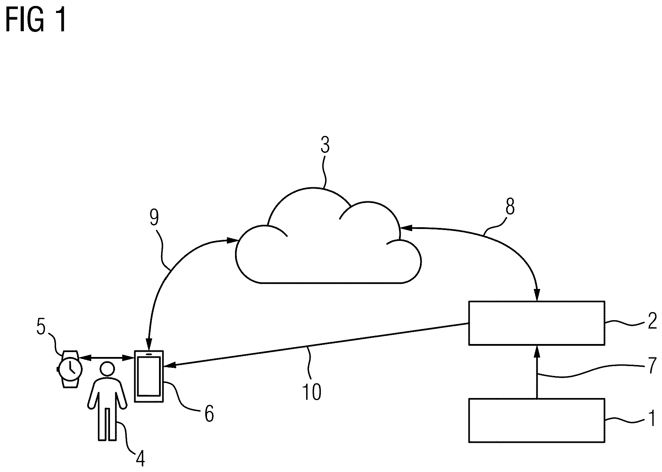

Fig. 1: Ein Ausführungsbeispiel mit einer Telematikeinheit und einem Smartphone

Die Figur 1 zeigt ein Ausführungsbeispiel.

Ein Fahrzeug umfasst eine Vielzahl von Fahrzeugreifen, die jeweils mit einem Reifenmodul 1 ausgestattet sind. Die Reifenmodule sind z.B. auf der Reifeninnenseite befestigt und weisen u.a. einen Drucksensor, einen Temperatursensor und einen Beschleunigungssensor auf.

Die Reifenmodule 1 an den Fahrzeugreifen weisen jeweils eine Sende- und Empfangseinheit auf, mit der die Reifendaten gesendet werden. Die Telematikeinheit 2 empfängt die Reifendaten und leitet sie anschließend über eine Funkverbindung 8 an ein Backend 3 im Internet weiter.

Die Reifendaten werden im Backend gespeichert und dann einem Flottenmanager für die Fahrzeuge bereitgestellt. Der Flottenmanager kann anhand der Reifendaten entscheiden, ob eine Wartung an einzelnen Fahrzeugreifen durchgeführt werden sollte. Beim neuen Verfahren werden die Reifendaten direkt mit der Telematikeinheit 2 ausgewertet und unter Umständen eine Warnmeldung generiert. Es wird immer dann eine Warnmeldung generiert, wenn beispielsweise ein signifikanter Minderdruck an einem der Fahrzeugreifen vorliegt. Für den Fall, dass eine Warnmeldung vorliegt, wird diese direkt an einer Anzeigevorrichtung für den Fahrer des Fahrzeuges weitergeleitet. Die Weiterleitung der Warnmeldung erfolgt beispielsweise über eine direkte Bluetooth Verbindung 10. Die Warnmeldung könnte alternativ auch als SMS an das Smartphone 6 weitergeleitet werden.

Bei diesem Ausführungsbeispiel ist die Anzeigevorrichtung das Smartphone 6. Der Fahrer des Fahrzeuges 4 wird über das Smartphone 6 direkt zu einem fehlerhaften Fahrzeugreifen gewarnt. Für den Fall, dass der Fahrer ebenfalls eine Smartwatch besitzt, kann die Warnmeldung ebenfalls auf das Display der Smartwatch übertragen werden. Die Mobilfunknummer des Fahrers könnte beispielsweise im Backend oder direkt auf einem Speicher der Telematikeinheit hinterlegt sein. Außerdem könnte sich der Fahrer über einen QR-Code am Fahrzeug für eine nachfolgende Fahrt mit seinem Smartphone registrieren. Bei diesem Vorgang könnte ebenfalls die Mobilfunknummer des Fahrers an die Telematikeinheit übermittelt werden.

Die Notfallbenachrichtigung, dass ein Reifenminderdruck vorliegt, kann alternativ auch aus dem Backend an die Anzeigevorrichtung für Fahrer geschickt werden. Diese Alternative ist z.B. dann erforderlich, wenn eine direkte Weiterleitung von der Anzeigevorrichtung nicht erfolgt ist.

### Bezugszeichenliste

- 1: Reifenmodule an einzelnen Fahrzeugreifen
- 2: Telematikeinheit
- 3: Backend
- 4: Fahrer
- 5: Smartwatch
- 6: Smartphone
- 7: Datenübertragung per Funk
- 8: Datenübertragung per Mobilfunk
- 9: Datenübertragung per Mobilfunk
- 10: Datenübertragung per Bluetooth

## Patentansprüche

1. Verfahren zum Empfangen von Reifendaten mit einer Telematikeinheit mit den folgenden Schritten:
a) Bereitstellen eines Fahrzeuges mit mindestens einem Fahrzeugreifen mit einem Reifenmodul (1),
wobei das Reifenmodul (1) eine Sendeeinheit zum Senden von Reifendaten umfasst,
b) Bereitstellen einer Telematikeinheit (2),
wobei mit der Telematikeinheit (1) die Reifendaten empfangen und über eine drahtlose Verbindung an ein Backend (3) einer externen Rechnereinheit weitergeleitet werden,
wobei die im Backend (3) gespeicherten und ausgewerteten Reifendaten einem Flottenmanagement bereit gestellt werden,
c) Auswerten der Reifendaten mit der Telematikeinheit (2),
wobei beim Detektieren von speziellen Reifendaten eine Warnmeldung generiert wird,
d) Direktes Weiterleiten der generierten Warnmeldung an eine Anzeigevorrichtung für den Fahrer (4) des Fahrzeuges,
wobei die Warnmeldung den Fahrer über einen Fehlerzustand an einem Fahrzeugreifen informiert.

2. Verfahren nach Anspruch 1,
**dadurch gekennzeichnet, dass**
die Anzeigevorrichtung ein Smartphone (6), Smartwatch (5) oder Handy von dem Fahrer (4) ist,
wobei die Warnmeldung als SMS oder als Pop-Up-Mitteilung angezeigt wird.

3. Verfahren nach einem der vorhergehenden Ansprüche,
**dadurch gekennzeichnet, dass**
die Anzeigevorrichtung ein Display vom Fahrzeug ist, wobei die Warnmeldung als Pop-Up-Mitteilung angezeigt wird.

4. Verfahren nach einem der vorhergehenden Ansprüche,
**dadurch gekennzeichnet, dass**
die Mobilfunknummer des Fahrers im Backend (3) gespeichert sind, wobei die Telematikeinheit (2) die Mobilfunknummer registriert und die Warnmeldung an die Mobilfunknummer des Fahrers (4) sendet, der momentan das Fahrzeug fährt.

5. Verfahren nach einem der vorhergehenden Ansprüche,
**dadurch gekennzeichnet, dass**
am Fahrzeug und/oder Fahrzeuganhänger ein QR-Code angeordnet ist, wobei sich der Fahrer (4) mit dem QR-Code für die anstehende Fahrt registriert und anschließend die Mobilfunknummer des Fahrers (4) an die Telematikeinheit (2) weitergeleitet wird.

6. Verfahren nach einem der vorhergehenden Ansprüche,
**dadurch gekennzeichnet, dass**
auf dem Smartphone (6) oder der Smartwatch (5) eine Software-App installiert ist,
wobei mit der Software-App die Warnmeldungen und/oder die Reifendruckwerte für die einzelnen Fahrzeugreifen des Fahrzeuges angezeigt werden.

7. Verfahren nach einem der vorhergehenden Ansprüche,
**dadurch gekennzeichnet, dass**
die Übertragung der Warnmeldung zur Anzeigevorrichtung mit einer Bluetooth-Verbindung erfolgt.

8. Verfahren nach einem der vorhergehenden Ansprüche,
**dadurch gekennzeichnet, dass**
die Reifendaten vom Reifenmodul eine gemessene Temperatur, einen gemessenen Druck, eine gemessene Reifenlast und/oder ermittelte Profiltiefe des Fahrzeugreifens umfassen.
